# EUROPÄISCHE PATENTSCHRIFT

(11) **EP 4 275 960 B1**
(45) Veröffentlichungstag und Bekanntmachung des Hinweises auf die Patenterteilung: **05.11.2025**
(21) Anmeldenummer: 23163362.9
(22) Anmeldetag: 22.03.2023
(51) Int. Cl.: G01S 7/521, G01S 13/931, G01S 15/931, G01D 11/30, B60R 19/48

(54) **VERFAHREN ZUR FEHLERFREIEN MONTAGE EINES ELEKTRONISCHEN BAUTEILS**
METHOD FOR ERROR-FREE MOUNTING OF AN ELECTRONIC COMPONENT
PROCÉDÉ DE MONTAGE SANS DÉFAUT D'UN COMPOSANT ÉLECTRONIQUE

(30) Priorität: 09.05.2022 DE 102022111437
(43) Veröffentlichungstag der Anmeldung: 15.11.2023
(73) Patentinhaber: RESRG Automotive SE & Co. KG, 95111 Rehau (DE)
(72) Erfinder: Czepa, Helmut, 95671 Bärnau (DE); Dietrich, Steffen, 95145 Oberkotzau (DE)

(56) Entgegenhaltungen:
- EP-A1- 1 555 163
- EP-A1- 1 785 316
- DE-A1- 10 156 049
- DE-A1- 19 819 698

## Beschreibung

Die Erfindung betrifft ein Verfahren zur fehlerfreien Montage eines als Sensor ausgebildeten elektronischen Bauteils an einem polymeren Außenanbauteil eines Kraftfahrzeuges mit den Merkmalen des Oberbegriffs des Patentanspruchs 1.

Das Adapterelement kann beispielsweise mittels eines Schweißvorganges an dem thermoplastischen Kfz-Außenanbauteil stoffschlüssig befestigt werden in dient zur positionsgenauen Montage des elektronischen Bauteils am Außenanbauteil. In der Praxis sind derartige Bauteile häufig als PDC-Sensoren (PDC = Park Distance Control) bzw. PTS-Sensoren (PTS = Park Tronic System) am Kfz-Außenanbauteil montiert, wobei die PDC-/PTS-Sensoren in der Regel als Einparkhilfen bzw. als Abstandswarner dienen. An einem beispielsweise als Stoßfänger ausgebildeten Kfz-Außenanbauteil werden in der Regel mehrere verschiedene elektronische Bauteile montiert. Diese unterscheiden sich zum Teil lediglich geringfügig, z.B. in der Ausrichtung des Steckers für die elektrische Bauteilkontaktierung. In einem solchen Fall kann es vergleichsweise einfach passieren, dass versehentlich anstelle eines Bauteils mit parallel zur Bauteilachse ausgerichtetem Stecker ein Bauteil mit radial zur Bauteilachse ausgerichtetem Kontaktstecker - also der falsche Steckertyp - montiert wird, wobei das falsche Bauteil ansonsten hinsichtlich seiner Geometrie weitgehend bzw. sogar vollkommen identisch zum Bauteil mit axialer Kontaktierung ist. Eine solche Falschmontage fällt dann häufig erst bei der Funktions-Endkontrolle des Fahrzeugs bzw. sogar erst beim Kunden auf und ist dann nur mit einem vergleichsweise hohen Aufwand (Demontage des Außenanbauteils etc.) zu beheben.

Ein Verfahren zur korrekten Montage eines Sensors an einem Kraftfahrzeug mittels eines Adapterelementes ist aus der DE 10 2018 104 715 B4 bekannt. Bei diesem Verfahren geht es jedoch darum, eine unbemerkt inkorrekte Positionierung des Sensors im Adapterelement zu vermeiden. Die US 2020/029657 A1 offenbart ebenfalls ein Verfahren zur Montage eines Sensors mit radial ausgerichtetem Stecker. Die EP 1 555 163 A1 offenbart eine Vorrichtung zum Erfassen von Hindernissen in der Nähe von Fahrzeugen.

Der Erfindung liegt hingegen die Aufgabe zugrunde, ein Verfahren mit den eingangs beschriebenen Merkmalen anzugeben, bei dem sichergestellt wird, dass der korrekte Typ des elektronischen Bauteils mit axial ausgerichtetem Stecker auch tatsächlich verbaut wird.

Diese Aufgabe wird erfindungsgemäß durch die Merkmale des Patentanspruchs 1 gelöst. Die Sperrvorrichtung ist hierbei erfindungsgemäß so gestaltet, dass sie die ordnungsgemäße Montage des korrekten elektronischen Bauteils mit parallel ausgerichtetem Stecker nicht behindert, den versehentlichen Einbau eines analogen Bauteils mit radial ausgerichtetem Stecker hingegen schon. Dies bedeutet konkret, dass die Sperrvorrichtung bei der Bauteilmontage einem Bauteil mit radial ausgerichtetem Stecker "im Weg steht", was hingegen beim Bauteil mit axial ausgerichteten Stecker nicht der Fall ist. Der Begriff "analoges" Bauteil meint insbesondere, dass das hier in Rede stehende elektronische Bauteil mit axial ausgerichtetem Stecker grundsätzlich dieselbe Funktion hat wie das entsprechende elektronische Bauteil mit radial ausgerichtetem Stecker, es sich z.B. in beiden Fällen jeweils um einen PDC-Sensor handelt. Insbesondere kann es sein, dass die beiden Bauteile sich hinsichtlich ihrer Gehäusegeometrie nur im Gehäuseumfangsbereich der Steckeranbindung unterscheiden, ansonsten aber zumindest im Wesentlichen oder sogar vollkommen identisch sind. Vorzugsweise ist die Sperrvorrichtung so dimensioniert, dass sie im montierten Zustand des Bauteils mit axialem Stecker von diesem Bauteil beabstandet ist.

Erfindungsgemäß weist das Adapterelement eine Öffnung auf, die bei der Montage vom Bauteil durchfasst wird, wobei die Sperrvorrichtung innenseitig im Randbereich der Öffnung vorgesehen wird. Die Sperrvorrichtung ist hierbei zweckmäßigerweise so gestaltet, dass sie hinsichtlich des "korrekten" Bauteils mit axialem Stecker (lediglich) in einen Freiraum eingreift, der im montierten Zustand gemeinsam von diesem Bauteil und dem Adapterelement gebildet wird. Beim versehentlichen Versuch der Montage eines Bauteils mit radialem Stecker hingegen befindet sich die Sperrvorrichtung in einem Bereich, der vom "falschen" Bauteil in seiner Montageposition eigentlich eingenommen wird, so dass es hier beim fehlerhaften Montageversuch zu einer Kollision zwischen Sperrvorrichtung und dem falschen Bauteil kommt und der Montagefehler hierdurch auffällt. Somit wird also die fehlerhafte Montage durch die erfindungsgemäße Lehre sicher verhindert.

Vorzugsweise ist die Sperrvorrichtung zumindest im Wesentlichen parallel zur Bauteilachse ausgerichtet. So kann die Sperrvorrichtung beispielsweise im Montagezustand des korrekten Bauteils parallel und beabstandet zum in Achsrichtung verlaufenden Gehäuse des Bauteils angeordnet sein. Insbesondere liegt es im Rahmen der Erfindung, dass die Sperrvorrichtung einen im montierten Zustand vom Adapterelement und parallel ausgerichteten Stecker gebildeten Freiraum bereichsweise ausfüllt und hierbei bis an den Stecker heranragt, diesen jedoch nicht berührt. Ein solcher Freiraum ist bei der versehentlichen Montage eines Bauteils mit radialem Stecker hingegen nicht vorhanden, so dass die Sperrvorrichtung bei der Montage mit diesem falschen Bauteil Stecker kollidiert.

Das Adapterelement kann im Wege die Spritzgießens hergestellt sein und hierbei die Sperrvorrichtung einstückig an das Adapterelement angeformt werden. Dies erlaubt eine besonders kostengünstige Bereitstellung der Sperrvorrichtung, wobei das Adapterelement vorzugsweise als Polymerbauteil ausgeführt ist. Erfindungsgemäß steht die Sperrvorrichtung zur Kraftfahrzeuginnenseite hin vor und ist als Kombination mehrerer voneinander beabstandeter Rippen ausgebildet. Im Rahmen der Erfindung liegt es hierbei insbesondere, dass die Sperrvorrichtung mit einer Höhe von mindestens 2 mm nach innen vorsteht.

Zweckmäßigerweise ist das Adapterelement mit einer von der Sperrvorrichtung beabstandeten Anschlagfläche versehen, gegen die das Bauteil beim Montagevorgang zur Anlage kommt. Der Anschlag des Bauteils gegen diese Anschlagfläche beendet zweckmäßigerweise die Montagebewegung, wobei diese Montagebewegung von der Sperrvorrichtung bei einer Montage des richtigen Bauteils mit axialem Stecker nicht beeinflusst wird, bei einer Montage des falschen Bauteils mit radialem Stecker hingegen schon.

Der Sensor ist vorzugsweise als PDC-Sensor und/oder das Außenanbauteil als Kfz-Stoßfänger ausgebildet.

Im Folgenden wird die Erfindung anhand einer lediglich ein Ausführungsbeispiel darstellenden Zeichnung ausführlich erläutert. Es zeigen schematisch:
- Fig. 1: eine Innenansicht eines erfindungsgemäßen Adapterelementes, an dem ein bestimmungsgemäßes elektronisches Bauteil montiert ist,
- Fig. 2: den Schnitt A3 - A3 in Fig. 1,
- Fig. 3: die Draufsicht A in Fig. 1,
- Fig. 4: den Schnitt A2 - A2 in Fig. 3,
- Fig. 5: das Adapterelement gemäß Fig. 3, gemeinsam abgebildet mit einem nicht bestimmungsgemäßen elektronischen Bauteil (gestrichelte Darstellung)

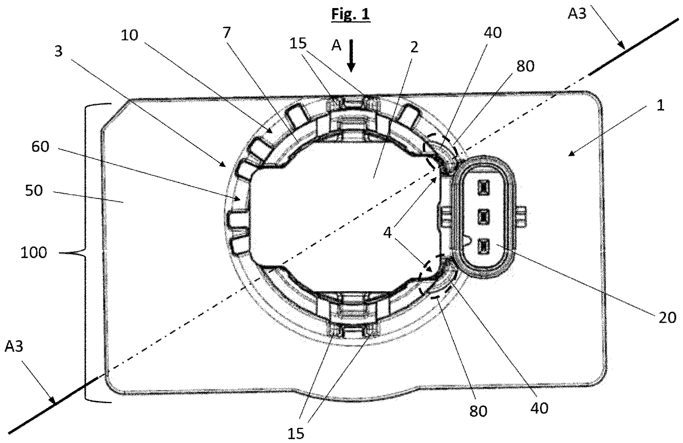

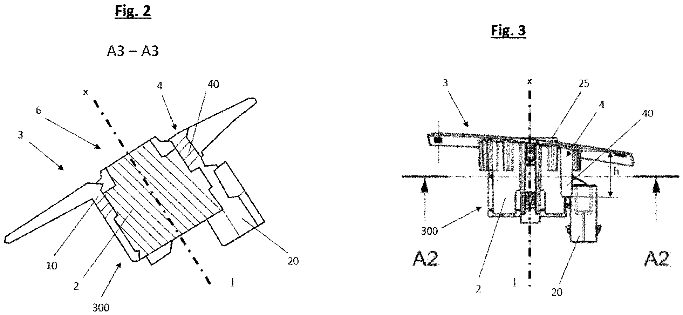

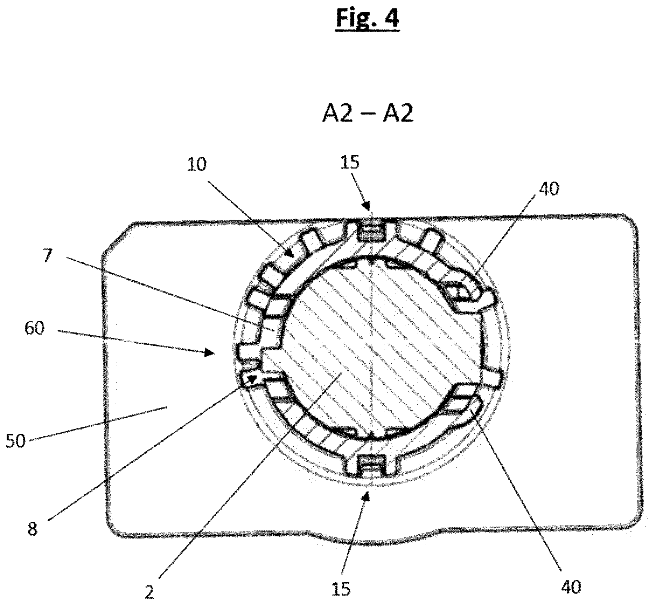

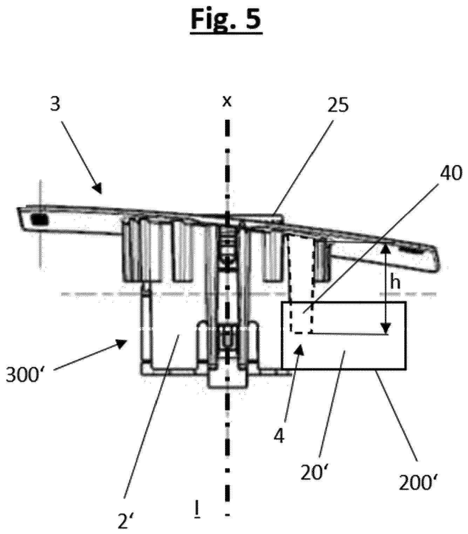

Die Figur 1 zeigt eine Bauteilgruppe 100 bestehend aus einem Adapterelement 3 und einem elektronischen Bauteil 2, welches im Ausführungsbeispiel als PDC-Sensor ausgebildet ist. Das Adapterelement 3 dient zur Aufnahme und fehlerfreien Montage des Sensors 2 an einem polymeren Außenanbauteils 1 in Form eines Stoßfängers eines Kraftfahrzeuges. Der Sensor 2 ist mit einem parallel zur Bauteilachse x (s. Fig. 2, 3) ausgerichteten Stecker 20 für eine elektrische Kontaktierung des Sensors 2 versehen. Bei der Montage des Sensors 2 wird dieser mit dem Adapterelement 3 in Kontakt gebracht, am Adapterelement 3 fixiert und hierdurch am Stoßfänger 1 in exakter Position montiert, so dass die ordnungsgemäße Funktion des Sensors 2 sicher gewährleistet ist. Das Adapterelement 3 besitzt hierzu eine eine kreisförmige Öffnung 6 aufweisende Aufnahmevorrichtung 10 (s. Fig. 2) zur Aufnahme des Sensors 2. Wie einer vergleichenden Betrachtung der Fig. 1 bis 4 zu entnehmen ist, wird die Öffnung 6 des Adapterelementes 3 bei der Montage vom Sensor 2 durchfasst (s.a. äußere Stirnseite 25 des Sensors 2 in Fig. 3). Zur Herstellung eines stoffschlüssigen Anschlusses an den Stoßfänger 1 weist diese Aufnahmevorrichtung 10 eine Verbindungseinrichtung 50 in Form eines Schweißflansches auf. Durch eine Sperrvorrichtung 4 am Adapterelement 3 wird die versehentliche Montage eines analogen Sensors 2' mit einem radial zur Bauteilachse x' ausgerichteten Stecker 20' verhindert (s. Fig. 5). Die Sensoren 2 und 2' unterscheiden sich im Ausführungsbeispiel hinsichtlich ihrer Gehäusegeometrie nur im jeweiligen innenseitigen Bereich 300 bzw. 300', also dem Gehäuseumfangsbereich der jeweiligen Steckeranbindung. Die Sperrvorrichtung 4 ist hierbei derart ausgebildet, dass sie im montierten Zustand des Sensors 2 mit achsparallelem Stecker 20 in unmittelbarer Nähe dieses Steckers 20 positioniert ist, diesen jedoch nicht berührt und somit von diesem Stecker 20 - wenn auch nur geringfügig mit einem Abstand von z.B. < 1 mm - beabstandet ist. Somit wird die ordnungsgemäße Montage des korrekten Sensors 2 mit axial ausgerichtetem Stecker 20 von der Sperrvorrichtung 4 nicht behindert, der versehentliche Einbau eines analogen Sensors 2' mit radial ausgerichtetem Stecker 20' hingegen schon. Konkret steht die Sperrvorrichtung 4 - wie der Figur 5 zu entnehmen ist - beim versehentlichen Montagevorgang eines Sensors 2' mit radial ausgerichteten Stecker 20' diesem Sensor 2' sozusagen "im Weg", was hingegen beim Sensor 2 mit axial ausgerichtetem Stecker 20 nicht der Fall ist. Insbesondere die Fig. 1 und 4 zeigen, dass zur Fixierung des Sensors 2 am Adapterelement 3 Rastelemente 15 vorgesehen sind.

Wie der Figur 1 ferner zu entnehmen ist, ist die Sperrvorrichtung 4 so gestaltet, dass sie hinsichtlich des "korrekten" Sensors 20 mit axialem Stecker 2 in einen Freiraum 80 eingreift, der im montierten Zustand gemeinsam von diesem Stecker 2 und dem Adapterelement 3 gebildet wird. Bei der versehentlichen Montage eines Sensors 2' mit radialem Stecker 20' hingegen befindet sich die Sperrvorrichtung 4 in einem Bereich, der normalerweise vom montierten Sensor 20' eingenommen wird (s. Fig. 5), so dass es hier beim fehlerbehafteten Montageversuch zu einer Kollision zwischen Sperrvorrichtung 4 und dem Sensor 2' kommt (gekennzeichnet durch eine gestrichelte Darstellung der Sperrvorrichtung 4) und der Montagefehler hierdurch auffällt. Konkret weist im Ausführungsbeispiel gemäß Fig. 5 der Sensor 2' einen radialen Stecker 20' mit einem Gehäuse 200' auf, der auf derselben Seite liegt wie der axiale Stecker 20 gemäß Fig. 1 bis 3. Entsprechend kollidiert die Sperrvorrichtung 4 bei einem versehentlichen Versuch der Montage des Sensors 2' mit dessen radialen Stecker 20'. Man erkennt weiterhin anhand einer vergleichenden Betrachtung der Fig. 1 und 3, dass die Sperrvorrichtung 4 im Montagezustand des korrekten Sensors 2 parallel und beabstandet zum in Achsrichtung x verlaufenden Gehäuse 200 des Sensors 2 angeordnet ist. Konkret füllt die Sperrvorrichtung 4 im montierten Zustand den vom Adapterelement 3 und dem parallel ausgerichteten Stecker 20 gebildeten Freiraum 80 (s. Fig. 1) bereichsweise aus und reicht hierbei unmittelbar bis an den Stecker 20 heran, berührt diesen jedoch nicht. Ein solcher Freiraum 80 ist bei der versehentlichen Montage des Sensors 2' mit radialem Stecker 20' (Fig. 5) hingegen nicht vorhanden, so dass die Sperrvorrichtung 4 bei der Montage mit diesem Sensor 2' kollidiert. Ferner ist insbesondere anhand der Fig. 3 und 4 erkennbar, dass die Sperrvorrichtung 4 parallel zur Bauteilachse x ausgerichtet ist.

Die Sperrvorrichtung 4 ist zur Kraftfahrzeuginnenseite I hin gerichtet (s. Fig. 2, 3) und steht entsprechend vom Adapterelement 3 nach innen vor. Das Adapterelement 3 ist als im Wege des Spritzgießens hergestelltes Polymerbauteil ausgebildet und hierbei wurde die Sperrvorrichtung 4 einstückig an das Adapterelement 3 angeformt. Es ist ferner erkennbar, dass die Sperrvorrichtung 4 als zur Kraftfahrzeuginnenseite I hin mit einer Höhe h von mindestens 2 mm vorstehende Kombination zweier voneinander beabstandeten Rippen 40 ausgebildet ist (s. insbes. Fig. 1 und 3). Der Stecker 20 ist im Montagezustand zumindest bereichsweise zwischen diesen beiden Rippen 40 angeordnet.

Einer vergleichenden Betrachtung der Figuren 1 bis 4 ist zu entnehmen, dass die Sperrvorrichtung 4 im Randbereich 7 der Öffnung 6 angeordnet ist und auf der um 180° gedrehten gegenüberliegenden Seite 60 dieses Randbereiches 7 fehlt, während hingegen auf dieser gegenüberliegenden Seite 60 der Aufnahmevorrichtung 10 eine Anschlagfläche 8 für den Sensor 2 vorgesehen ist. Entsprechend ist diese Anschlagfläche 8 von der Sperrvorrichtung 4 beabstandet angeordnet. Beim Montagevorgang kommt der Sensor 2 gegen die Anschlagfläche 8 zur Anlage. Der Anschlag des Sensors 2 gegen diese Anschlagfläche 8 beendet die Montagebewegung, wobei diese Montagebewegung von der Sperrvorrichtung 4 bei der Montage des richtigen Sensors 2 mit axialem Stecker 20 nicht behindert wird.

## Patentansprüche

1. Verfahren zur fehlerfreien Montage eines als Sensor ausgebildeten elektronischen Bauteils (2) an einem polymeren Außenanbauteil (1) eines Kraftfahrzeuges,
- wobei der Sensor (2) mit einem zumindest im Wesentlichen parallel zur Bauteilachse (x) ausgerichteten Stecker (20) für eine elektrische Kontaktierung des Sensors (2) versehen ist,
- wobei der Sensor (2) ein Gehäuse (200) aufweist, welches in Bauteilachsrichtung (x) des Sensors (2) verläuft,
- wobei das Außenanbauteil (1) mit einem Adapterelement (3) zur Aufnahme des Sensors (2) ausgestattet wird,
- wobei der Sensor (2) mit dem Adapterelement (3) in Kontakt gebracht und hierdurch am Außenanbauteil (1) montiert wird, und
- wobei das Adapterelement (3) eine kreisförmige Öffnung (6) aufweist, die bei der Montage vom Sensor (2) durchfasst wird,
**dadurch gekennzeichnet, dass** durch eine kraftfahrzeuginnenseitig im Randbereich (7) der Öffnung (6) vorgesehene Sperrvorrichtung (4) am Adapterelement (3) und/oder am Außenanbauteil (1) die versehentliche Montage eines analog ebenfalls als Sensor ausgebildeten Bauteils (2') mit einem zumindest im Wesentlichen radial zur Bauteilachse (x') ausgerichteten Stecker (20') verhindert wird,
- wobei die Sperrvorrichtung (4) zur Kraftfahrzeuginnenseite (I) hin vorsteht und als Kombination zweier voneinander beabstandeter Rippen (40) ausgebildet und der zumindest im Wesentlichen parallel zur Bauteilachse (x) ausgerichtete Stecker (20) im Montagezustand zumindest bereichsweise zwischen diesen beiden Rippen (40) angeordnet ist, und
- wobei der Sensor (2') einen radialen Stecker (20') mit einem Gehäuse (200') aufweist, der auf derselben Seite liegt wie der zumindest im Wesentlichen parallel zur Bauteilachse (x) ausgerichtete Stecker (20) und entsprechend die Sperrvorrichtung (4) bei einem versehentlichen Versuch der Montage des Sensors (2') mit dessen radialem Stecker (20') kollidiert,
- so dass insgesamt die ordnungsgemäße Montage des korrekten Sensors (2) mit zumindest im Wesentlichen parallel zur Bauteilachse (x) ausgerichtetem Stecker (20) von der Sperrvorrichtung (4) nicht behindert wird, der versehentliche Einbau eines analogen Sensors (2') mit radial ausgerichtetem Stecker (20') hingegen schon.

2. Verfahren nach Anspruch 1, **dadurch gekennzeichnet, dass** die Sperrvorrichtung (4) zumindest im Wesentlichen parallel zur Bauteilachse (x) ausgerichtet ist.

3. Verfahren nach Anspruch 1 oder 2, **dadurch gekennzeichnet, dass** das Adapterelement (3) im Wege die Spritzgießens hergestellt und hierbei die Sperrvorrichtung (4) einstückig an das Adapterelement (3) angeformt wird.

4. Verfahren nach Anspruch 3, **dadurch gekennzeichnet, dass** die Sperrvorrichtung (4) mit einer Höhe von mindestens 2 mm nach innen vorsteht.

5. Verfahren nach einem der Ansprüche 1 bis 4, **dadurch gekennzeichnet, dass** das Adapterelement (3) mit einer von der Sperrvorrichtung (4) beabstandeten Anschlagfläche (8) versehen ist, gegen die der Sensor (2) beim Montagevorgang zur Anlage kommt.

6. Verfahren nach einem der Ansprüche 1 bis 5, **dadurch gekennzeichnet, dass** der Sensor (2) als PDC-Sensor und/oder das Außenanbauteil (1) als Kfz-Stoßfänger ausgebildet ist.

## Claims

1. Method for error-free mounting of an electronic component (2) designed as a sensor on a polymer outer attachment part (1) of a motor vehicle,
- wherein the sensor (2) is provided with a plug (20) aligned at least substantially parallel to the component axis (x) for electrical contacting of the sensor (2),
- wherein the sensor (2) has a housing (200), which extends in the component axis direction (x) of the sensor (2),
- wherein the outer attachment part (1) is equipped with an adapter element (3) for receiving the sensor (2),
- wherein the sensor (2) is brought into contact with the adapter element (3) and thereby mounted on the outer attachment part (1), and
- wherein the adapter element (3) has a circular opening (6) through which the sensor (2) passes during mounting,
**characterised in that** a locking device (4) provided on the inside of the motor vehicle in the edge region (7) of the opening (6) on the adapter element (3) and/or on the outer attachment part (1) prevents the inadvertent mounting of a component (2'), which is likewise designed as a sensor, with a plug (20') aligned at least substantially radially to the component axis (x'),
- wherein the locking device (4) projects towards the inside (I) of the motor vehicle and is designed as a combination of two ribs (40) spaced apart from one another and the plug (20), which is aligned at least substantially parallel to the component axis (x), is arranged between these two ribs (40) at least in certain regions in the mounted state, and
- wherein the sensor (2') has a radial plug (20') having a housing (200'), which lies on the same side as the plug (20) aligned at least substantially parallel to the component axis (x) and correspondingly the locking device (4) collides with the radial plug (20') of the sensor (2') in the event of an inadvertent attempt to mount this sensor,
- such that overall the proper mounting of the correct sensor (2) with plug (20) aligned at least substantially parallel to the component axis (x) is not hindered by the locking device (4), but the inadvertent installation of an analogous sensor (2') with radially aligned plug (20') is hindered.

2. Method according to claim 1, **characterised in that** the locking device (4) is aligned at least substantially parallel to the component axis (x).

3. Method according to claim 1 or 2, **characterized in that** the adapter element (3) is produced by injection moulding and the locking device (4) is integrally moulded onto the adapter element (3).

4. Method according to claim 3, **characterised in that** the locking device (4) protrudes inwards with a height of at least 2 mm.

5. Method according to any one of claims 1 to 4, **characterised in that** the adapter element (3) is provided with a stop surface (8) spaced apart from the locking device (4), against which stop surface the sensor (2) comes to rest during the mounting process.

6. Method according to any one of claims 1 to 5, **characterised in that** the sensor (2) is designed as a PDC sensor and/or the outer attachment part (1) is designed as a motor vehicle bumper.

## Revendications

1. Procédé de montage sans erreur d'un composant électronique (2) réalisé sous forme de capteur sur une pièce rapportée extérieure (1) en polymère d'un véhicule automobile,
- le capteur (2) étant pourvu d'un connecteur (20) orienté au moins essentiellement parallèlement par rapport à l'axe de composant (x) pour une mise en contact électrique du capteur (2),
- le capteur (2) présentant un boîtier (200) qui s'étend dans la direction de l'axe de composant (x) du capteur (2),
- la pièce rapportée extérieure (1) étant équipée d'un élément adaptateur (3) destiné à recevoir le capteur (2),
- le capteur (2) étant mis en contact avec l'élément adaptateur (3) et étant ainsi monté sur la pièce rapportée extérieure (1), et
- l'élément adaptateur (3) présentant une ouverture circulaire (6) qui est traversée par le capteur (2) lors du montage,
**caractérisé en ce que,** grâce à un dispositif de blocage (4) prévu du côté intérieur du véhicule automobile dans la zone de bordure (7) de l'ouverture (6) sur l'élément adaptateur (3) et/ou sur la pièce rapportée extérieure (1), le montage accidentel d'un composant (2') réalisé de manière analogue également sous forme de capteur avec un connecteur (20') orienté au moins essentiellement radialement par rapport à l'axe de composant (x') est empêché,
- le dispositif de blocage (4) faisant saillie vers le côté intérieur du véhicule automobile (1) et étant réalisé sous forme de combinaison de deux nervures (40) espacées l'une de l'autre et le connecteur (20) orienté au moins essentiellement parallèlement à l'axe de composant (x) étant agencé, à l'état monté, au moins par zones entre ces deux nervures (40), et
- le capteur (2') présentant un connecteur radial (20') avec un boîtier (200') qui se situe du même côté que le connecteur (20) orienté au moins essentiellement parallèlement à l'axe de composant (x) et, en conséquence, le dispositif de blocage (4) entrant en collision avec le connecteur radial (20') du capteur (2') en cas de tentative de montage accidentelle de ce dernier,
- de telle sorte que, globalement, le montage conforme du capteur (2) correct avec un connecteur (20) orienté au moins essentiellement parallèlement à l'axe de composant (x) n'est pas entravé par le dispositif de blocage (4), alors que le montage accidentel d'un capteur analogue (2') avec un connecteur (20') orienté radialement l'est.

2. Procédé selon la revendication 1, **caractérisé en ce que** le dispositif de blocage (4) est orienté au moins essentiellement parallèlement à l'axe de composant (x).

3. Procédé selon la revendication 1 ou 2, **caractérisé en ce que** l'élément adaptateur (3) est fabriqué au cours du moulage par injection et le dispositif de blocage (4) est formé d'une seule pièce sur l'élément adaptateur (3).

4. Procédé selon la revendication 3, **caractérisé en ce que** le dispositif de blocage (4) fait saillie vers l'intérieur sur une hauteur d'au moins 2 mm.

5. Procédé selon l'une quelconque des revendications 1 à 4, **caractérisé en ce que** l'élément adaptateur (3) est pourvu d'une surface de butée (8) espacée du dispositif de blocage (4), contre laquelle le capteur (2) vient en appui lors de l'opération de montage.

6. Procédé selon l'une quelconque des revendications 1 à 5, **caractérisé en ce que** le capteur (2) est réalisé sous forme de capteur PDC et/ou la pièce rapportée extérieure (1) est réalisée sous forme de pare-chocs de véhicule automobile.
